(19) Europäisches Patentamt
European Patent Office
Office européen des brevets

(11) Veröffentlichungsnummer: **0 518 022 A1**

# (12) EUROPÄISCHE PATENTANMELDUNG

(21) Anmeldenummer: **92106203.0**

(51) Int. Cl.[5]: **C08L 77/00**

(22) Anmeldetag: **10.04.92**

(30) Priorität: **12.06.91 DE 4119301**

(43) Veröffentlichungstag der Anmeldung:
**16.12.92 Patentblatt 92/51**

(84) Benannte Vertragsstaaten:
**AT BE CH DE FR GB IT LI NL**

(71) Anmelder: **HÜLS AKTIENGESELLSCHAFT**
**Patentabteilung / PB 15 - Postfach 13 20**
**W-4370 Marl 1(DE)**

(72) Erfinder: **Poll, Günter, Dr.**
**Venusweg 9**
**W-4370 Marl(DE)**
Erfinder: **Finke, Jürgen, Dr.**
**Münsterlandstrasse 22**
**W-4370 Marl(DE)**
Erfinder: **Beyer, Horst**
**Bitterfelder Strasse 9 a**
**W-4370 Marl(DE)**
Erfinder: **Modler, Harald, Dr.**
**Hattinger Strasse 103**
**W-4630 Bochum(DE)**

## (54) Formmassen auf Basis aromatischer Polyamide.

(57) 2.1 Es sollen Formmassen mit einem möglichst geringen Schmelzviskositätsindex und verbesserten mechanischen Eigenschaften zur Verfügung gestellt werden.

2.2 Dies wurde durch Formmassen erreicht, die

I. ein aromatisches Polyamid mit der Grundstruktur

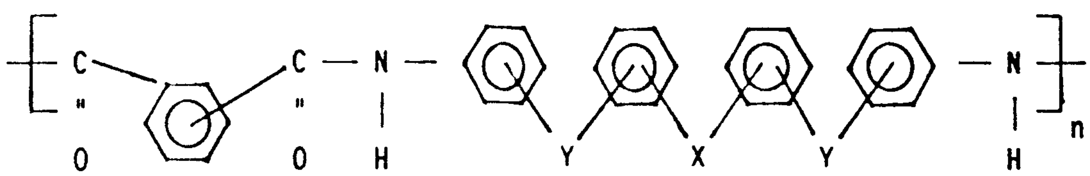

wobei

X: $-SO_2-$; -CO-

Y: -O-; -S-

bedeuten,

und

II. einen aromatischen flüssigkristallinen Thermoplasten

enthalten.

2.3 Mit Hilfe der Erfindung gelingt es, Formmassen mit dem gewünschten verbesserten Eigenschaftsbild zu erhalten.

EP 0 518 022 A1

Gegenstand der Erfindung sind Formmassen auf Basis aromatischer Polyamide.

Die Herstellung aromatischer Polyamide mit der Grundstruktur

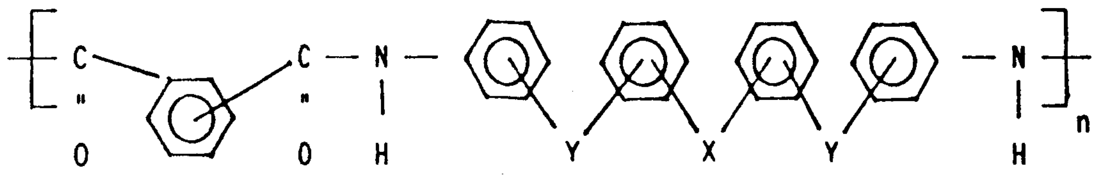

ist grundsätzlich bekannt (DE-OS 36 09 011). Die Schmelzviskosität dieser aromatischen Polyamide ist allerdings erheblich. Daher sind bei ihrer Herstellung und Verarbeitung sehr hohe Temperaturen erforderlich - im allgemeinen mindestens 350 °C. Bei diesen Temperaturen wird häufig eine Schädigung des Produktes beobachtet, erkennbar an Verfärbung oder einer Verschlechterung der mechanischen Eigenschaften. Ferner besteht Bedarf daran, die mechanischen Eigenschaften bei den genannten aromatischen Polyamiden zu verbessern.

Aufgabe der Erfindung war es, aromatische Polyamide zur Verfügung zu stellen, die die geschilderten Nachteile der Produkte des Standes der Technik nicht aufweisen.

Diese Aufgabe wurde durch Formmassen gelöst, die

I. ein aromatisches Polyamid mit der Grundstruktur

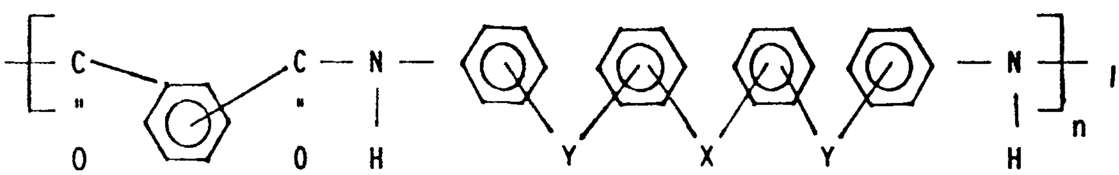

wobei

X: $-SO_2-$; -CO-

Y: -O-; -S-

bedeuten,

und

II. einen aromatischen flüssigkristallinen Thermoplasten

enthalten.

Bevorzugt werden Formmassen, bei denen das Gewichtsverhältnis der Komponente I. zu Komponente II. im Bereich von 99 : 1 bis 50 : 50, vorzugsweise im Bereich von 98 : 2 bis 60 : 40, liegt.

Die Polyamide (Komponente I.) enthalten als aromatische Dicarbonsäuren Isophthalsäure, Terephthalsäure, 1.4-, 1.5-, 2.6-, 2.7-Naphthalindicarbonsäure, 4.4'-Diphenyletherdicarbonsäure oder 4.4'-Benzophenondicarbonsäure, 4.4'-Diphenylsulfondicarbonsäure, 2-Phenoxy-terephthalsäure, 4.4'-Biphenyldicarbonsäure oder Gemische davon.

Bevorzugt wird Isophthalsäure allein oder ein Gemisch von Isophthalsäure mit einer der weiteren oben genannten Säuren eingesetzt. Im letzteren Fall werden bis zu 45 Mol-% Isophthalsäure ersetzt.

Als aromatische Diamine kommen z. B. 4.4'-Bis(4-aminophenoxy)diphenylsulfon, 4.4'-Bis(3-aminophenoxy)diphenylsulfon, 4.4'-Bis(4-aminophenoxy)benzophenon, 4.4'-Bis(3-aminophenoxy)benzophenon, 4.4'-Bis(p-aminophenylmercapto)benzophenon, 4.4'-Bis(p-aminophenylmercapto)diphenylsulfon oder Gemische davon in Frage.

Bevorzugt wird 4.4'-Bis(4-aminophenoxy)diphenylsulfon verwendet.

Das molare Einsatzverhältnis von Dicarbonsäure zu Diamin bewegt sich im Bereich von etwa 0,9 : 1 bis zu 1 : 0,9.

Um eine verbesserte Hydrolysebeständigkeit der aromatischen Polyamide (Komponente I.) zu erreichen, können noch 0,01 bis 10 Mol-% - bezogen auf die Summe von Dicarbonsäure und Diamin - eines niedermolekularen aliphatischen, araliphatischen oder aromatischen Carbonsäureamids zugesetzt werden. Hierbei kann der aromatische Rest durch Halogen oder durch $C_1$- bis $C_4$-Alkylreste substituiert sein. Diese Maßnahme wird in DE-OS 38 04 401 beschrieben.

Die Hydrolysebeständigkeit kann ebenfalls dadurch verbessert werden, indem die Dicarbonsäure in

geringem Überschuß eingesetzt (DE-OS 39 35 467) oder, falls Dicarbonsäure und Diamin ungefähr äquimolar vorliegen, zusätzlich eine Monocarbonsäure zugegeben wird (DE-OS 39 35 468).

Die Herstellung der aromatischen Polyamide ist grundsätzlich bekannt. Sie wird u. a. in DE-OS 36 09 011 beschrieben.

Bevorzugt wird bei der Herstellung der aromatischen Polyamide ein Phosphor enthaltender Katalysator verwendet. Hierfür kommen insbesondere Säuren der allgemeinen Formel $H_3PO_a$ mit a = 2 bis 4 sowie Derivate davon in Frage. Insbesondere sind Phosphorsäure, Phosphorige Säure, Hyperphosphorige Säure, Phosphonsäure, z. B. Methanphosphonsäure, Phenylphosphonsäure; Phosphonigsäure, z. B. Benzolphosphonigsäure; Phosphinsäure, z. B. Diphenylphosphinsäure, zu nennen. Anstelle der reinen Säuren können auch Salze davon eingesetzt werden. Geeignete Kationen sind z. B. Metalle der Alkali- bzw. Erdalkaligruppe, Zinn, o. ä.

Der Katalysator wird in einer Menge von 0,01 bis 4,0 Mol-%, vorzugsweise 0,2 bis 2,0 Mol-% - bezogen auf die Summe von Dicarbonsäure und Diamin - eingesetzt.

Eine bevorzugte Arbeitsweise bei der Herstellung der aromatischen Polyamide ist es, neben dem Katalysator noch Dialkylaminopyridine als Cokatalysator einzusetzen.

Besonders geeignete Dialkylaminopyridine sind solche mit 1 bis 10 C-Atomen in der Alkylgruppe. Bevorzugt verwendet werden 4-Dimethylaminopyridin, 4-Dibutylaminopyridin, 4-Piperidinylpyridin, die gegebenenfalls zusammen mit dem Aminostickstoff einen Pyrrolidin oder Piperidinring bilden können.

Sofern ein Cokatalysator benutzt wird, wird er in einer Menge von 0,05 bis 4 Mol-%, vorzugsweise von 0,2 bis 2 Mol-% - bezogen auf die Summe Dicarbonsäure und Diamin - eingesetzt. In besonders bevorzugten Fällen wird der Cokatalysator in einer äquivalenten Menge zu dem Katalysator in die Reaktionsmischung zugegeben.

Die Reaktion wird in der Schmelze bei Temperaturen im Bereich von 200 bis 400 °C, vorzugsweise von 230 bis 360 °C durchgeführt.

Üblicherweise wird unter Inertgas bei Normaldruck gearbeitet. Es kann jedoch auch bei Über- bzw. Unterdruck gearbeitet werden.

Zur Erhöhung des Molekulargewichtes können die aromatischen Polyamide einer Festphasennachkondensation in einer Inertgasatmosphäre unterzogen werden.

Die Glastemperatur ($T_g$) der aromatischen Polyamide liegt im Bereich von 190 bis 270 °C, die Viskositätszahlen (J-Werte) bei etwa 30 bis 150 $cm^3/g$, bevorzugt bei 60 bis 120 $cm^3/g$. Der Schmelzviskositätsindex (MVI-Wert) weist Werte von 0,1 bis 200 $cm^3/10$ min., vorzugsweise von 1,0 bis 60 $cm^3/10$ min., auf.

Aromatische flüssigkristalline Thermoplasten (Komponente II.) sind grundsätzlich bekannt. Eine Definition der Eigenschaft "flüssigkristallin" ist Polymer <u>31</u>, 979 f (1990) bzw. Kunststoffe <u>80</u>, 1159 f (1990) zu entnehmen. In erster Linie handelt es sich um aromatische Polyester und Polyesteramide. Es sind jedoch auch andere Thermoplasten geeignet, sofern sie flüssigkristalline Eigenschaften aufweisen.

Die bevorzugten aromatischen, flüssigkristallinen Polyester bzw. Polyesteramide sind aus Dicarbonsäuren, Dihydroxiverbindungen, Diaminen, Hydroxi- bzw. Aminocarbonsäuren, Aminophenolen aufgebaut.

Als (Di)carbonsäuren kommen z. B. Terephthalsäure, Isophthalsäure, 1.4- bzw. 2.6-Naphthalindicarbonsäure, 4.4'-Diphenyletherdicarbonsäure, 4.4'-Dicarboxidiphenylsulfon sowie p-Hydroxibenzoesäure, 6-Hydroxi-2-Naphthalincarbonsäure, 3- oder 4-Aminobenzoesäure in Frage.

Als Dihydroxiverbindungen sind z. B. Hydrochinon, Resorzin, 4.4'-Dihydroxibiphenyl, 4,4'-Dihydroxidiphenylsulfon (Bisphenol S), 4,4'-Dihydroxidiphenylsulfid (Bisphenol T), 4.4'-Dihydroxibenzophenon, 1.4- bzw. 2.6-Dihydroxinephthalin zu nennen.

Geeignete Aminoverbindungen sind z. B. 3- bzw. 4-Aminophenol, 3- bzw. 4-Aminobenzoesäure, 1.3- bzw. 1.4-Diaminobenzol.

Besonders geeignete aromatische, flüssigkristalline Thermoplasten sind in EP-OSS 0 063 680; 0 081 900; 0 102 160; 0 134 956; 0 170 935; 0 201 831; 0 205 855; 0 257 558 und in US-PSS 3 778 410; 0 380 485; 4 574 066 beschrieben. Aus den genannten Schriften ist ihre Herstellung und Zusammensetzung bekannt.

Die flüssigkristallinen Thermoplasten sind u. a. auch dadurch charakterisiert, daß ihr Schmelzviskositätsindex (MVI-Wert) bei 380 °C und 10 Kp Last im Bereich von 5 bis 200 $cm^3/10$ min. liegt (DIN 53 735-B).

Geeignete aromatische flüssigkristalline Thermoplasten sollen

- einen Schmelzpunkt im Bereich von etwa 250 °C bis 330 °C aufweisen
- bis 400 °C, vorzugsweise 350 °C, temperaturstabil sein
- eine flüssigkristalline Phase im Verarbeitungsbereich der Formmassen aufweisen
- mit der Komponente I. unverträglich sein.

Die Unverträglichkeit ist charakterisiert durch eine Phasenseparation von aromatischem Polyamid und

flüssigkristallinen Thermoplasten im Temperaturbereich von -273 bis 400 °C. Der Durchmesser der Phasenbereiche der flüssigkristallinen Thermoplaste beträgt mindestens 0,05 µm.

Die Komponenten I. und II. können auf üblichen Maschinen durch Spritzguß oder Extrusion gemischt und zu Formmassen verarbeitet werden.

Die Formmassen können zusätzlich noch Füllstoffe, wie Talkum, oder Verstärkungsmittel, wie Glas-, ARAMID[R]- oder Kohlefasern, sowie andere übliche Zusätze, wie z. B. Pigmente oder Stabilisatoren, enthalten.

Die erfindungsgemäßen Formmassen werden nach üblichen Verfahren wie Spritzguß, Extrusion o. ä. zu Formteilen, Fasern, Folien usw. verarbeitet. Ebenso ist die Verwendung als Beschichtungsmittel ausgehend vom Pulver (z. B. Wirbelsinterverfahren), einer flüssigen Dispersion oder einer Lösung möglich.

Es wurde festgestellt, daß die erfindungsgemäßen Formmassen gegenüber den aromatischen Polyamiden (Komponente I.) deutlich besser zu verarbeiten sind, d. h. eine niedrigere Schmelzviskosität aufweisen, und daß sie ein in wesentlichen Punkten bemerkenswert besseres Bild der mechanischen Eigenschaften zeigen.

Die in der Beschreibung und in den Beispielen genannten Parameter wurden mit Hilfe nachstehender Verfahren bestimmt.

Der Glaspunkt ($T_g$) und der Schmelzpunkt ($T_m$) wurden unter Verwendung eines DSC (METTLER TA 3 000) bei einer Aufheizrate von 20 °C/min. bestimmt.

Die Viskositätszahlen (J) wurden an 0,5 % Gew.-%igen Lösungen der Polyamide in einem Phenol/o-Dichlorbenzol-Gemisch (1 : 1 Gewichtsteile) bei 25 °C nach DIN 53 728 bestimmt.

Der Schmelzviskositätsindex (MVI-Wert) wurde an einem Göttfert-Viskosimeter bei 320 °C und 21,6 Kp Last nach DIN 53 735-B bestimmt.

Der Biege-E-Modul wurde gemäß DIN 53 547-B 3, der Zug-E-Modul gemäß DIN 53 547-t, die Biegefestigkeit nach DIN 53 452 und die Zugfestigkeit gemäß DIN 53 455 erhalten.

Mit Buchstaben gekennzeichnete Beispiele sind nicht erfindungsgemäß.-

## Beispiele

### Beispiel A: (gemäß DE-OS 36 09 011 - Beispiel 1)

21,62 g (0,05 Mol) 4,4'-Bis(4-aminophenoxy)diphenylsulfon, 8,31 g (0,05 Mol) Isophthalsäure wurden in Gegenwart von 109 µl (0,001 Mol) 50-%iger wäßriger Hypophosphoriger Säure und 122 mg (0,001 Mol) 4-Dimethylaminopyridin in einem Polykondensationsreaktor mit Rührer, Stickstoffeinleitung und Destillationsbrücke bei 250 °C aufgeschmolzen. Die Temperatur wurde nach 20 Minuten auf 300 °C erhöht. Dabei nahm die Viskosität der Schmelze stetig zu, während das im Verlauf der Reaktion freiwerdende Wasser abdestilliert wurde. Nach 30 Minuten bei 300 °C wurde die Reaktion abgebrochen. Die Viskositätszahl (J) betrug 35 $cm^3$/g. Eine Festphasennachkondensation bei 250 °C und 0,5 mbar lieferte nach 24 h ein Polyamid mit J-Wert: 75 $cm^3$/g.

$T_g$: 250 °C MVI-Wert: 5.3 $cm^3$/10 min.

### Beispiel 1

39,6 g des aromatischen Polyamids gemäß Beispiel A und 0,4 g eines handelsüblichen flüssigkristallinen Polyesteramids (VECTRA[R] B 950 - Polyesteramid auf Basis von p-Hydroxibenzoesäure, 2.6-Hydroxinaphthalindicarbonsäure, p-Aminobenzoesäure; MVI-Wert: 258 g/10 min. bei 300 °C und 2,16 Kp Last) wurden in einem Laborkneter (Fa. Haake) 15 min. bei 320 °C unter Stickstoffabdeckung miteinander vermischt. Es wurde ein opakes Blend erhalten.

J-Wert: 54 $cm^3$/g $T_g$: 251 °C MVI-Wert: 7,3 $cm^3$/10 min.

### Beispiele 2 - 6

Die Beispiele 2 - 6 wurden analog Beispiel 1 durchgeführt, jedoch wurde das Mischungsverhältnis aromatisches Polyamid zu flüssigkristalinem Polyesteramid variiert. Die Anteile der einzelnen Komponenten sowie die Eigenschaften der erhaltenen Formmassen zeigt Tabelle 1.

Tabelle 1

| Beispiel | PA*) [Gew.-%] | PEA**) [Gew.-%] | J-Wert [$cm^3/g$] | MVI-Wert [$cm^3$/10 min] | $T_g$ [°C] | $T_m$ [°C] |
|---|---|---|---|---|---|---|
| 1 | 99 | 1 | 54 | 7.3 | 251 | - |
| 2 | 97 | 3 | 51 | 7.7 | 252 | - |
| 3 | 95 | 5 | 51 | 15.9 | 248 | - |
| 4 | 90 | 10 | 55 | 19.4 | 249 | 283 |
| 5 | 80 | 20 | 60 | 64.1 | 248 | 281 |
| 6 | 70 | 30 | 53 | 126 | 253 | 283 |
| A | 100 | 0 | 75 | 5.3 | 250 | - |

*) PA: aromatisches Polyamid
**) PEA: flüssigkristallines Polyesteramid

Beispiel 7

Eine Mischung aus 95 Gew.-Tle. aromatischem Polyamid gemäß Beispiel A und 5 Gew.-Tle. flüssigkristallines Polyesteramid gemäß Beispiel 1 wurde auf einem Zweischneckenkneter der Fa. Berstorff (Typ ZE 25) bei 330 °C Gehäusetemperatur, einer Schneckendrehzahl von 70 $min^{-1}$ und einem Durchsatz von 3 kg/h in der Schmelze hergestellt und anschließend granuliert. Das erhaltene Granulat wurde zu Prüfkörpern verarbeitet, die folgende Eigenschaften aufwiesen:

Tabelle 2

| | Beispiel 7 | Beispiel A |
|---|---|---|
| J-Wert [$cm^3/g$] | 75 | 62 |
| MVI-Wert [$cm^3$/10 min] | 15.9 | 5.3 |
| Biege-E-Modul [$N/mm^2$] | 3 950 | 3 400 |
| Zugfestigkeit [$N/mm^2$] | 3 330 | 3 000 |
| Zug-E-Modul [$N/mm^2$] | 83 | 69 |
| Biegefestigkeit [$N/mm^2$] | 178 | 168 |

**Patentansprüche**

**1.** Formmasse auf Basis aromatischer Polyamide enthaltend
I. aromatisches Polyamid mit der Grundstruktur

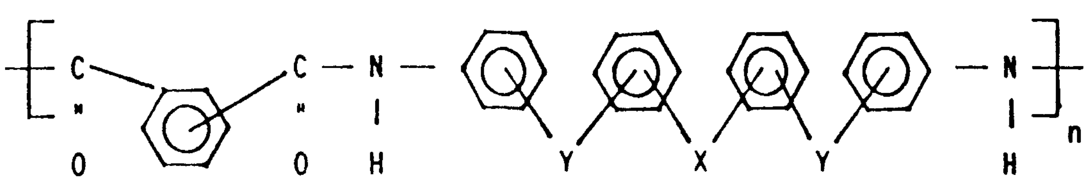

wobei
X: $-SO_2-$; -CO-
Y: -O-; -S-
bedeuten,

und
II. aromatischen flüssigkristallinen Thermoplasten.

**2.** Formmasse gemäß Anspruch 1, dadurch gekennzeichnet, daß in der Formmasse das Gewichtsverhältnis von Komponente I. zu Komponente II. 99 : 1 bis 50 : 50 beträgt.

**3.** Formmasse gemäß Anspruch 1 und 2, dadurch gekennzeichnet, daß in der Formmasse das Gewichtsverhältnis von Komponente I. zu Komponente II. 98 : 2 bis 60 : 40 beträgt.

Europäisches Patentamt

# EUROPÄISCHER RECHERCHENBERICHT

Nummer der Anmeldung

EP 92 10 6203

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A,D | EP-A-0 237 722 (HÜLS AKTIENGESELLSCHAFT)<br>* Ansprüche 1-8 *<br>--- | 1-3 | C08L77/00 |
| A | EP-A-0 359 037 (BAYER AG)<br>* Ansprüche 1-10 *<br>--- | 1-3 | |
| A | EP-A-0 087 831 (ANIC S.P.A.)<br>* Ansprüche 1-3 *<br>----- | 1-3 | |
| | | | **RECHERCHIERTE SACHGEBIETE (Int. Cl.5 )** |
| | | | C08L |

Der vorliegende Recherchenbericht wurde für alle Patentansprüche erstellt

| Recherchenort | Abschlußdatum der Recherche | Prüfer |
|---|---|---|
| DEN HAAG | 17 SEPTEMBER 1992 | GLANDDIER A. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)